# EUROPEAN PATENT APPLICATION

(11) **EP 3 996 408 A1**
(43) Date of publication of application: **11.05.2022**
(21) Application number: 20847206.8
(22) Date of filing: 23.06.2020
(51) Int. Cl.: H04W 24/02

(54) **USER PLANE DATA ACQUISITION METHOD AND APPARATUS, AND STORAGE MEDIUM**

(30) Priority: 26.07.2019 CN 201910683670
(71) Applicant: Huawei Technologies Co., Ltd., Longgang District Shenzhen, Guangdong 518129 (CN)
(72) Inventor: CHONG, Weiwei, Shenzhen, Guangdong 518129 (CN); ZHOU, Runze, Shenzhen, Guangdong 518129 (CN); XIN, Yang, Shenzhen, Guangdong 518129 (CN)
(74) Representative: Pfenning, Meinig & Partner mbB
(86) International application number: PCT/CN2020/097769
(87) International publication number: WO 2021/017689

(57) **Abstract**

This application provides a user plane data obtaining method and an apparatus, and a storage medium. The method includes: A first network element sends a first request message to a session management function network element, where the first request message is used to indicate the session management function network element to request a user plane function network element to provide user plane data. The first network element obtains the user plane data from the user plane function network element. In this way, when determining that the user plane data needs to be obtained, the first network element may send the first request message to the session management function network element, to obtain the user plane data from the user plane function network element. In other words, in the foregoing solution, a process of how the first network element obtains the user plane data is provided.

## Description

### CROSS-REFERENCE TO RELATED APPLICATION

This application claims priority to Chinese Patent Application No. 201910683670.0, filed with the China National Intellectual Property Administration on July 26, 2019, and entitled "USER PLANE DATA OBTAINING METHOD, APPARATUS, AND STORAGE MEDIUM", which is incorporated herein by reference in its entirety.

### TECHNICAL FIELD

This application relates to the field of communication technologies, and in particular, to a user plane data obtaining method, an apparatus, and a storage medium.

### BACKGROUND

In a 5th generation (5th generation, 5G) mobile communication system, some function network elements need to obtain user plane data, to perform analysis based on the obtained user plane data. For example, a network data analytics function (network data analytics function, NWDAF) network element can analyze a large amount of communication network-related data, and send an analysis result to another function network element, for example, a policy control function (policy control function, PCF) network element, an access or mobility management function (Access and Mobility Management Function, AMF) network element, or a session management function (Session Management Function, SMF) network element. The another function network element executes a corresponding communication service policy based on the analysis result.

In many scenarios, an NWDAF generates analysis results based on user plane data. In this case, the NWDAF needs to obtain related user plane data in advance. Currently, how an NWDAF obtains required user plane data is not provided.

### SUMMARY

This application provides a user plane data obtaining method, an apparatus, and a storage medium, to allow a first network element to obtain required user plane data.

According to a first aspect, this application provides a user plane data obtaining method, where the method includes: A first network element sends a first request message to a session management function network element. The first network element obtains user plane data from a user plane function network element. The first request message is used to indicate the session management function network element to request the user plane function network element to provide the user plane data.

Based on this solution, when determining that the user plane data needs to be obtained, the first network element may send the first request message to the session management function network element, to obtain the user plane data that needs to be obtained from the user plane function network element. In other words, in the foregoing solution, a process of how the first network element obtains the user plane data is provided.

In this application, the user plane data that needs to be obtained includes but is not limited to user plane data related to a terminal device and data corresponding to a user plane function network element supporting the first profile.

When the user plane data is user plane data related to a terminal device, the first network element may send a second request message to a data management network element, and receive a second response message from the data management network element. The second request message is used to request, from the data management network element, information about the user plane function network element serving the terminal device. The second response message includes the information about the user plane function network element. In this way, the first network element can obtain user plane data related to a terminal device. Because the first network element may first obtain a user plane function network element serving the terminal device, a range of final subscription object of the session management function network element, namely, user plane function network elements may be limited. Therefore, it helps avoid sending a subsequent subscription request message to an unrelated user plane function network element, thereby reducing signaling overheads.

When the user plane data is data corresponding to a user plane function network element supporting a first profile, the first network element may send a third request message to a network repository function network element, and receive a third response message from the network repository function network element, where the third request message is used to request, from the network repository function network element, information about the session management function network element corresponding to the user plane function network element, and the third response message includes the information about the session management function network element. In this way, this implements that the first network element obtains related user plane data from the user plane function network element supporting the first profile, and the first network element first determines the session management function network element by using the first profile, thereby avoiding subscription to an unrelated session management function network element. That is, a range of subscribed session management function network elements is limited, thereby reducing signaling overheads.

In a possible implementation, the first request message may include information about the user plane function network element. In this way, the session management function network element may determine, based on the information about the user plane function network element in the first request message, the user plane function network element that provides the user plane data, to request the user plane data from the user plane function network element.

In a possible implementation, a manner in which the first network element obtains the user plane data includes one of the following manners.

Manner 1: The first network element may receive a first response message from the session management function network element, where the first response message includes the user plane data.

Manner 2: The first network element receives a fourth response message from the user plane function network element, where the fourth response message includes the first user plane data. The fourth response message is sent by the user plane function network element to the first network element after the user plane function network element receives a fourth request message from the session management function network element, and the fourth request message is generated by the session management function network element based on the first request message.

In a possible implementation, the first request message includes a first identifier. The first identifier is used to indicate a type of the user plane data to the session management function network element. The fourth request message includes a second identifier. The second identifier is used to indicate the type of the user plane data to the user plane function network element. The fourth response message further includes a second identifier. The first network element maps the second identifier to the first identifier based on an association relationship between the first identifier and the second identifier. In this way, when a type of the user plane data that can be identified between the first network element and the session management function network element is different from a type of the user plane data that can be identified between the session management function network element and the user plane function network element, conversion between types of the user plane data can be implemented by using the mapping process.

It should be understood that if the first request message is a subscription request message, the first identifier is a first event identifier. Correspondingly, if the fourth request message is also a subscription request message, the second identifier is a second event identifier.

Further, the fourth response message further includes the association relationship between the second identifier and the first identifier. Based on this, after receiving the fourth response message, the first network element may directly map the second event identifier to the first event identifier based on an association relationship between the first event identifier and the second event identifier.

In a possible implementation, the first request message further includes first filtering information, the fourth request message further includes second filtering information, and the fourth response message further includes the second filtering information. In this case, the first network element maps the second filtering information to the first filtering information based on an association relationship between the first filtering information and the second filtering information.

Further, the fourth response message further includes the association relationship between the second filtering information and the first filtering information. Based on this, after receiving the fourth response message, the first network element may directly map the second filtering information to the first filtering information based on the association relationship between the first filtering information and the second filtering information.

In a possible implementation, the first network element obtains information about the session management function network element from the data management network element, where the session management function network element serves the terminal device.

In a possible implementation, the third request message includes the first profile. This helps the network repository function network element determines, based on the first profile, the user plane function network element supporting the first profile.

In a possible implementation, the third response message further includes information about the user plane function network element. In this way, the session management function network element can quickly determine an object for sending the first request message, that is, the user plane function network element.

In a possible implementation, the first network element determines, based on the first profile, a second profile supported by the session management function network element. The third request message further includes the second profile.

In a possible implementation, the first profile includes at least one of the following: the information about the session management function network element associated with the user plane function network element, information about an application supported by the user plane function network element, information about whether the user plane function network element supports a capability exposure service, service area information of the user plane function network element, and information about a user group served by the user plane function network element.

According to a second aspect, this application provides a network element information obtaining method, where the method includes: A data management network element receives a second request message from a first network element, and sends a second response message to the first network element, where the second request message is used to request, from the data management network element, information about a user plane function network element serving a terminal device, and the second response message includes the information about the user plane function network element.

Based on this solution, the first network element can obtain user plane data related to a terminal device. Because the first network element may first obtain a user plane function network element serving the terminal device, a range of final subscription object of a session management function network element, namely, user plane function network elements may be limited. Therefore, it helps avoid sending a subsequent subscription request message to an unrelated user plane function network element, thereby reducing signaling overheads.

In a possible implementation, the second request message is further used to request, from the data management network element, information about the session management function network element serving the terminal device, and the second response message further includes the information about the session management function network element. In this way, the first network element can directly send a first request message to the session management function network element in the second response message.

In a possible implementation, the data management network element receives a first registration request message from the session management function network element and/or the user plane function network element, where the first registration request message includes the information about the user plane function network element. The data management network element stores the information about the user plane function network element in the data management network element based on the first registration request message.

In a possible implementation, the data management network element stores the information about the session management function network element in the data management network element based on the first registration request message, where the first registration request message further includes the information about the session management function network element.

According to a third aspect, this application provides a network element information obtaining method, where the method includes: A network repository function network element receives a third request message from a first network element, where the third request message is used to request, from the network repository function network element, information about a session management function network element corresponding to a user plane function network element, and the third request message includes a first profile supported by the user plane function network element. The network repository function network element determines the information about the session management function network element based on the third request message. The network repository function network element sends a third response message to the first network element, where the third response message includes the information about the session management function network element.

Based on this solution, this implements that the first network element obtains related user plane data from the user plane function network element supporting the first profile, and the first network element first determines the session management function network element by using the first profile, thereby avoiding subscription to an unrelated session management function network element. That is, a range of subscribed session management function network elements is limited, thereby reducing signaling overheads.

In a possible implementation, the network repository function network element receives a second registration request message from the user plane function network element. The network repository function network element stores, in the network repository function network element based on the second registration request message, the first profile supported by the user plane function network element. The second registration request message includes the first profile. The first profile supported by the user plane function network element is registered with the network repository function network element, so that the network repository function network element stores and manages the user plane function network element. In addition, another network element can subsequently determine, based on the first profile, the session management function network element corresponding to the user plane function network element supporting the first profile.

In a possible implementation, a network repository function determines, based on the first profile, a second profile supported by the session management function network element, and determines the information about the session management function network element based on the second profile.

In a possible implementation, the network repository function network element receives a third registration request message from the session management function network element, where the third registration request message includes the second profile. The network repository function network element stores the second profile in the network repository function network element based on the third registration request message.

In a possible implementation, the first profile includes at least one of the following content: the information about the session management function network element associated with the user plane function network element, information about an application supported by the user plane function network element, information about whether the user plane function network element supports a capability exposure service, service area information of the user plane function network element, and information about a user group served by the user plane function network element.

In a possible implementation, the network repository function network element determines that the first profile includes the information about the session management function network element associated with the user plane function network element, and may determine the information about the session management function network element based on the information about the session management function network element associated with the user plane function network element.

According to a fourth aspect, this application provides a user plane data obtaining method, where the method includes: A session management function network element receives a first request message from a first network element, where the first request message is used to indicate the session management function network element to request a user plane function network element to provide user plane data, and the first request message includes a first identifier. The first identifier is used to indicate a type of the user plane data to the session management function network element. The session management function network element may determine, based on the first identifier, a second identifier included in a fourth request message, where the second identifier is used to indicate the type of the user plane data to the user plane function network element. The session management function network element may send the fourth request message to the user plane function network element, where the fourth request message is used to request the user plane data from the user plane function network element.

Based on this solution, when a type of the user plane data that can be identified between the first network element and the session management function network element is different from a type of the user plane data that can be identified between the session management function network element and the user plane function network element, conversion between types of the user plane data can be implemented by using a mapping process.

In a possible implementation, the first request message further includes information about a first user plane function network element.

In a possible implementation, the first request message further includes first filtering information. The session management function network element determines, based on the first filtering information, second filtering information included in the fourth request message.

In a possible implementation, the fourth request message further includes target address information, where the target address information is used to notify the user plane function network element of a target address for reporting the user plane data. The target address information is address information of the first network element or address information of the session management function network element. If the target address is the address information of the first network element, the user plane function network element may directly report a fourth response message to the first network element without processing performed by the session management function network element. In this way, the session management function network element avoids receiving, processing, and storing data that is not required by the session management function network element. Further, workload of the session management function network element is reduced, and the user plane function network element can directly report the user plane data to the first network element.

In a possible implementation, if the target address is the address information of the session management function network element, the session management function network element sends a first response message to the first network element, where the first response message includes the user plane data.

In a possible implementation, the session management function network element sends the fourth request message to the user plane function network element by using a service-based interface. Alternatively, the session management function network element sends the fourth request message to the user plane function network element by using an N4 interface.

According to a fifth aspect, this application provides a user plane data obtaining method, where the method includes: A user plane function network element receives a fifth request message from a first network element, where the fifth request message is used to request user plane data from the user plane function network element. The user plane function network element sends a fifth response message to the first network element, where the fifth response message includes the user plane data.

Based on this solution, the first network element may directly request the user plane data from the user plane function network element without processing performed by a session management function network element. In this way, the session management function network element avoids receiving, processing, and storing data that is not required by the session management function network element. Further, workload of the session management function network element is reduced, and the user plane function network element can directly report the user plane data to the first network element.

In a possible implementation, the user plane function network element receives the fifth request message from the first network element by using a service-based interface.

In a possible implementation, the user plane function network element sends the fifth response message to the first network element by using the service-based interface.

According to a sixth aspect, this application provides a user plane data obtaining method, where the method includes: A user plane function network element receives a fourth request message from a session management function network element, where the fourth request message is used to request user plane data from the user plane function network element. The user plane function network element sends a fourth response message to a first network element, where the fourth response message includes the user plane data.

Based on this solution, the user plane function network element directly sends the fourth response message to the first network element, so that the session management function network element avoids receiving, processing, and storing data that is not required by the session management function network element, thereby reducing workload of the session management function network element.

In a possible implementation, the user plane function network element may send the fourth response message to the first network element based on target address information.

Example 1: The fourth request message further includes target address information, where the target address information is address information of the first network element. In this way, the session management function network element avoids receiving, processing, and storing data that is not required by the session management function network element. Further, workload of the session management function network element is reduced, and the user plane function network element can directly report the user plane data to the first network element.

Based on Example 1, the user plane function network element may send the fourth response message to the first network element by using a service-based interface.

Example 2: The fourth request message further includes target address information, where the target address information may also be address information of the session management function network element. In this case, the user plane function network element may send the fourth response message to the session management function network element. Then the session management function network element forwards the fourth response message to the first network element.

Based on Example 2, the user plane function network element may send the fourth response message to the session management function network element by using a service-based interface. Alternatively, the user plane function network element may send the fourth response message to the session management function network element by using an N4 interface.

In a possible implementation, the fourth request message further includes an association relationship between a first identifier and a second identifier. The first identifier is used to indicate a type of the user plane data to the session management function network element. The second identifier is used to indicate the type of the user plane data to the user plane function network element. The user plane function network element maps the second identifier to the first identifier based on the association relationship between the first identifier and the second identifier.

In a possible implementation, the fourth request message further includes an association relationship between first filtering information and second filtering information. The user plane function network element maps the second filtering information to the first filtering information based on the association relationship between the first filtering information and the second filtering information.

In a possible implementation, the fourth response message further includes the association relationship between the first identifier and the second identifier, and/or the association relationship between the first filtering information and the second filtering information.

According to a seventh aspect, this application provides a registration method, where the method includes: A session management function network element receives a session establishment request message from a terminal device. The session management function network element sends a first registration request message to a data management network element, where the first registration request message includes information about a user plane function network element serving the terminal device. The session establishment request message is used to request the session management function network element to establish a session for the terminal device. The first registration request message is used to request the data management network element to store information about the user plane function network element in the data management network element.

Based on this solution, the session management function network element can register the information about the user plane function network element with the data management network element.

In a possible implementation, the first registration request message further includes information about the session management function network element, and the first registration request is further used to request the data management network element to store the information about the session management function network element in the data management network element.

According to an eighth aspect, this application provides a registration method, where the method includes: A user plane function network element receives a connection establishment request message from a session management function network element. The user plane function network element sends a first registration request message to a data management network element, where the first registration request message includes information about a user plane function network element serving a terminal device. The connection establishment request message is used to request the user plane function network element to establish a user plane transmission tunnel for the terminal device. The first registration request message is used to request the data management network element to store the information about the user plane function network element in the data management network element.

Based on this solution, the user plane function network element can directly register the information about the user plane function network element with the data management network element.

According to a ninth aspect, this application provides a registration method, where the method includes: A user plane function network element sends a second registration request message to a network repository function network element, where the second registration request message includes a first profile supported by the user plane function network element, and the second registration request message is used to request the network repository function network element to store the first profile.

Based on this solution, the first profile of the user plane function network element may be registered with the network repository function network element, so that the network repository function network element stores and manages the user plane function network element. In addition, another network element can subsequently determine, based on the first profile, the session management function network element corresponding to the user plane function network element supporting the first profile.

In a possible implementation, the first profile includes at least one of the following content: the information about the session management function network element associated with the user plane function network element, information about an application supported by the user plane function network element, information about whether the user plane function network element supports a capability exposure service, service area information of the user plane function network element, and information about a user group served by the user plane function network element.

According to a tenth aspect, this application provides a communication apparatus. The communication apparatus may be a first network element (for example, a data analysis network element), a session management function network element, a data management network element, a network repository function network element, or a user plane function network element. The communication apparatus has a function of implementing the first network element, the session management function network element, the data management network element, the network repository function network element, or the user plane function network element in the foregoing embodiment. The function may be implemented by hardware, or may be implemented by hardware executing corresponding software. The hardware or software includes one or more units or modules corresponding to the foregoing functions.

In a possible implementation, the communication apparatus includes a processor and a transceiver. The processor is configured to support the communication apparatus in performing corresponding functions of the first network element, the session management function network element, the data management network element, the network repository function network element, or the user plane function network element in the foregoing communication method. The transceiver is configured to support communication between the communication apparatus and another communication apparatus. The transceiver may be an independent receiver, an independent transmitter, a transceiver integrated with a receiving/transmission function, or an interface circuit. Optionally, the communication apparatus may further include a memory. The memory may be coupled to the processor, and the memory stores program instructions and data that are necessary for the communication apparatus.

In a possible implementation, the communication apparatus may be a first network element, a session management function network element, a data management network element, a network repository function network element, or a user plane function network element. Alternatively, the communication apparatus may be a component that is applied to the first network element, the session management function network element, the data management network element, the network repository function network element, or the user plane function network element, for example, a chip, a chip system, or a circuit.

According to an eleventh aspect, this application provides a communication apparatus. The communication apparatus is configured to: implement the first aspect or any method in the first aspect, implement the second aspect or any method in the second aspect, implement the third aspect or any method in the third aspect, implement the fourth aspect or any method in the fourth aspect, implement the fifth aspect or any method in the fifth aspect, implement the sixth aspect or any method in the sixth aspect, implement the seventh aspect or any method in the seventh aspect, implement the eighth aspect or any method in the eighth aspect, or implement the ninth aspect or any method in the ninth aspect. The communication apparatus includes corresponding function modules, to implement the steps in the foregoing methods. The function may be implemented by hardware, or may be implemented by hardware executing corresponding software. The hardware or software includes one or more modules corresponding to the foregoing functions.

In a possible implementation, a structure of the communication apparatus includes a processing unit and a transceiver unit. The units may perform corresponding functions in the foregoing method example. For details, refer to detailed descriptions in the method example. Details are not described herein. The transceiver unit may be a transceiver or a communication interface.

In any one of the foregoing aspects, a first network element may be a data analysis network element, for example, a network data analysis function network element.

According to a twelfth aspect, this application provides a chip system, including a processor. Optionally, the chip system may further include a memory, where the memory is configured to store a computer program, and the processor is configured to invoke from the memory and run the computer program. Therefore, an apparatus on which the chip system is installed is enabled to perform the method according to any one of the first aspect to the ninth aspect and the possible implementations of the first aspect to the ninth aspect.

According to a thirteenth aspect, this application provides a computer storage medium. The computer storage medium stores instructions. When the instructions are run on a computer, the computer is enabled to perform the method according to any one of the first aspect to the ninth aspect and the possible implementations of the first aspect to the ninth aspect.

According to a fourteenth aspect, this application provides a computer program product including instructions. When the computer program product runs on a computer, the computer is enabled to perform the method according to any one of the first aspect to the ninth aspect and the possible implementations of the first aspect to the ninth aspect.

### BRIEF DESCRIPTION OF DRAWINGS

FIG. 1 is a schematic diagram of an architecture of a communication system according to this application;
FIG. 2 is a schematic flowchart of a user plane data obtaining method according to this application;
FIG. 3a is a schematic flowchart of a network element information obtaining method according to this application;
FIG. 3b is a schematic flowchart of another network element information obtaining method according to this application;
FIG. 4 is a schematic flowchart of another user plane data obtaining method according to this application;
FIG. 5 is a schematic flowchart of still another user plane data obtaining method according to this application;
FIG. 6a is a schematic flowchart of a registration method according to this application;
FIG. 6b is a schematic flowchart of another registration method according to this application;
FIG. 7a is a schematic flowchart of a registration method according to this application;
FIG. 7b is a schematic flowchart of another registration method according to this application;
FIG. 8 is a schematic diagram of a structure of a communication apparatus according to this application; and
FIG. 9 is a schematic diagram of a communication apparatus according to this application.

### DESCRIPTION OF EMBODIMENTS

To make objectives, technical solutions, and advantages of embodiments of this application clearer, the following further describes the embodiments of this application in detail with reference to accompanying drawings.

A network architecture and a service scenario described in the embodiments of this application are intended to describe the technical solutions in the embodiments of this application more clearly, and do not constitute any limitation on the technical solutions provided in the embodiments of this application. A person of ordinary skill in the art may know that with evolution of the network architecture and emergence of a new service scenario, the technical solutions provided in the embodiments of this application are also applicable to a similar technical problem.

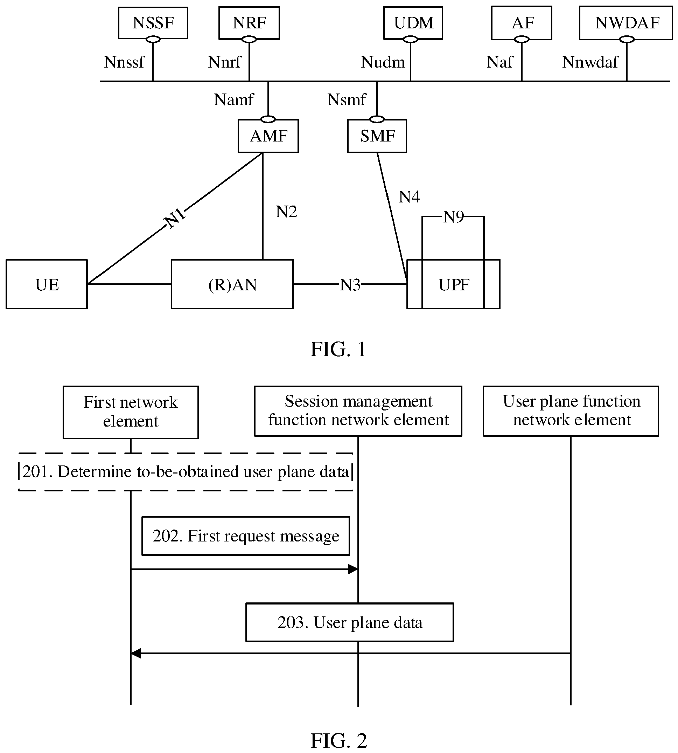

FIG. 1 shows an example of a schematic diagram of an architecture of a communication system according to this application. As shown in FIG. 1, the communication system may include a data analysis network element, a data management network element, a network repository function network element, a session management function network element, a user plane function network element, and a terminal device. The data analysis network element, the data management network element, the network repository function network element, and the session management function network element may be connected by using a bus. The bus herein means that connection and communication between network elements in the communication system can be implemented logically. Connection and communication may be implemented between the network elements in the communication system by using an interface or a network. The session management function network element is connected to the user plane function network element. The session management function network element may be configured to control the user plane function network element to execute a user plane-related policy, or the session management function network element may be configured to, by using a mobility management network element, control a terminal device or a radio access network (radio access network, RAN) to execute a session-related policy.

The data analysis network element is mainly configured to collect data from a network function (network function, NF) network element, an operation administration maintenance (operation administration maintenance, OAM) system, a terminal device, or an application layer function (application function, AF) network element, and analyze the collected data to obtain a data analysis result. The data analysis network element may further send the obtained data analysis result to the NF, the OAM system, the terminal device, or the AF network element, so that these entities perform corresponding policy formulation, operation execution, and the like. In the 5th generation (the 5th generation, 5G) communication, the data analysis network element may be a network data analytics function (network data analytics function, NWDAF) network element, a management data analytics service (management data analytics service, MDAS) network element, or the like. In future communication, for example, 6th generation (6th generation, 6G) communication, the data analysis network element may still be an NWDAF network element or an MDAS network element, or have another name. This is not limited in this application. The NF network element includes but is not limited to a mobility management function (access and mobility management function, AMF) network element, a session management function (session management function, SMF) network element, a policy control function (policy control function, PCF) network element, and the like in 5G.

The data management network element is mainly configured to manage and store user data, such as subscription information and authentication/authorization information. In 5G, the data management network element may be a unified data management (unified data management, UDM) network element or a unified data repository function (unified data repository, UDR) network element. In future communication, for example, 6G, the data management network element may still be a UDM network element or a UDR network element, or have another name. This is not limited in this application.

The network repository function network element is mainly configured to support service registration and network element status monitoring of a network function network element to implement automatic management, selection, and extension of a network function service. In 5G, the network repository function network element may be a network repository function (network repository function, NRF) network element. In future communication, for example, 6G, the network repository function network element may still be an NRF network element or have another name. This is not limited in this application.

The session management function network element is mainly used for session management in a mobile network, and selecting and controlling a user plane function network element. The session management includes session creation, modification, and release. A specific function includes, for example, allocating an internet protocol (internet protocol, IP) address to a user, selecting a user plane function network element that provides a packet forwarding function, and the like. In 5G, the session management function network element may be a session management function (session management function, SMF) network element. In future communication, for example, 6G, the session management function network element may still be an SMF network element or have another name. This is not limited in this application.

The user plane function network element is mainly used for user plane service processing, for example, packet routing and transmission, packet detection, service usage reporting, quality of service (Quality of Service, QoS) processing, lawful interception, uplink packet detection, and downlink packet storage. In 5G, the user plane function network element may be a user plane function (user plane function, UPF) network element. In future communication, for example, 6G, the user plane function network element may still be a UPF network element or have another name. This is not limited in this application. It should be noted that the UPF in this application is short for a core network UPF, and the UPF and the core network UPF have a same meaning. This will not be described in the following.

An access network device (also referred to as a radio access network (radio access network, RAN) device) is a device that provides a wireless communication function for a terminal. The access network device includes but is not limited to: a next generation NodeB (gNodeB, gNB), an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a baseband unit (baseband unit, BBU), a transmitting and receiving (transmitting and receiving point, TRP), a transmitting point (transmitting point, TP), a mobile switching center, and the like in 5G.

The terminal device (which may also be referred to as user equipment (user equipment, UE)) is a device having wireless receiving and sending functions, and may be deployed on land, for example, an indoor or outdoor device, a handheld device, or a vehicle-mounted device, or may be deployed on water (for example, on a steamship), or may be deployed in the air (for example, on an airplane, a balloon, or a satellite). The terminal may be a mobile phone (mobile phone), a tablet computer (Pad), a computer with a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like.

It should be noted that this application may also be applied to a 4th generation (the 4th generation, 4G) network architecture. For example, a mobility management entity (mobility management entity, MME) in 4G provides a function of the mobility management network element in this application. The MME and a serving gateway (serving gateway, SGW) in 4G provide a function of the session management function network element in this application. A packet data network gateway (PDN gateway, PGW) in 4G provides a function of the core network UPF in this application. A data analysis network element in 4G provides a function of the data analysis network element in this application. In addition, a form and a quantity of network elements shown in FIG. 1 are merely used as an example, and do not constitute a limitation on this application.

Before a method in this application is described, application scenarios in this application are first further described, to facilitate understanding of this solution. It should be noted that this part of content is also used as a part of optional content of this application.

A first network element needs to obtain user plane data to implement purposes such as network data analysis, traffic monitoring, or charging. For different requirements, a type of the user plane data that needs to be obtained by the first network element may be any granularity and any type. For example, the user plane data may be user plane data associated with a specific UE, or may be user plane data of a UPF supporting a specific profile. For example, the user plane data of the specific UE includes but is not limited to: traffic usage of the specific UE, a flow bit rate measurement (flow bit rate measurement) value of a service flow corresponding to an application (application) in the specific UE, start time and end time of user plane data transmission of the specific UE, and start or end time of data transmission (application data transportation start or end time) of an application of the specific UE. The user plane data of a UPF supporting a specific profile includes but is not limited to: traffic usage of all UEs on a UPF in an area, a packet size of an application on a UPF supporting the specific application, and the like. For different types of user data, how the first network element obtains required user plane data is a problem.

In view of the foregoing technical problem, the following describes the technical solutions provided in the embodiments of this application with reference to the accompanying drawings. FIG. 2 is a schematic flowchart of a user plane data obtaining method according to this application. The method includes the following steps.

Step 201: A first network element determines to-be-obtained user plane data.

Step 201 is an optional step. In step 201, the to-be-obtained user plane data may be user plane data related to a terminal device, may be user plane data corresponding to a user plane function network element supporting a profile, or may be user plane data of another type.

Step 202: The first network element sends a first request message to a session management function network element.

Herein, the first request message is used to indicate the session management function network element to request the user plane function network element to provide user plane data. The user plane data may be the to-be-obtained user plane data in step 201, and the first request message may be a subscription request message.

Step 203: The first network element obtains the user plane data from the user plane function network element. Herein, the user plane function network element may directly send the user plane data to the first network element, or the user plane function network element may send the user plane data to an NWDAF by using an SMF.

It can be learned from step 201 to step 203 that, when determining that the user plane data needs to be obtained, the first network element may send the first request message to the SMF, to obtain the user plane data that needs to be obtained from the user plane function network element. In other words, in the foregoing solution, a process of how the first network element obtains the user plane data is provided.

In this application, the first network element may be a data analysis network element or any other network function network element that needs to obtain the user plane data. The data analysis network element may be the NWDAF network element shown in FIG. 1, or may be a network element that is in a future communication system and that has a function of the NWDAF network element. A data management network element in this application may be the UDM network element shown in FIG. 1 and the UDR network element, or may be a network element that is in the future communication system and that has a function of the UDM network element. A network repository function network element in this application may be the NRF network element shown in FIG. 1, or may be a network element that is in the future communication system and that has a function of the NRF network element. The session management function network element in this application may be the SMF network element shown in FIG. 1, or may be a network element that is in the future communication system and that has a function of the SMF network element. The user plane function network element in this application may be the UPF network element shown in FIG. 1, or may be a network element that is in the future communication system and that has a function of the UPF network element.

For ease of description, in this application, an example in which the session management function network element is an SMF network element, the user plane function network element is a UPF network element, the first network element is a data analysis network element, the data analysis network element is an NWDAF network element, the data management network element is a UDM network element, and the network repository function network element is an NRF network element is used for description subsequently. Further, the SMF network element is referred to as an SMF for short, the UPF network element is referred to as a UPF for short, the UDM network element is referred to as a UDM for short, the NWDAF network element is referred to as an NWDAF for short, and the terminal device is referred to as UE for short. That is, in description below in this application, all SMFs may be replaced with session management function network elements, all UPFs may be replaced with user plane function network elements, all NWDAFs may be replaced with data analysis network elements, all UDMs may be replaced with data management network elements, all NRFs may be replaced with network repository function network elements, and all UEs may be replaced with terminal devices.

Based on different types of user plane data that the NWDAF needs to obtain, with reference to a specific scenario, the following separately describes in detail how the NWDAF determines the SMF to which the first request message is sent and how the NWDAF determines the UPF that provides the user plane data.

Scenario 1: The NWDAF needs to obtain user plane data related to the terminal device. That is, in scenario 1, the to-be-obtained user plane data is the user plane data related to the UE. For ease of describing the solution, the user plane data related to the UE is referred to as first user plane data in the following.

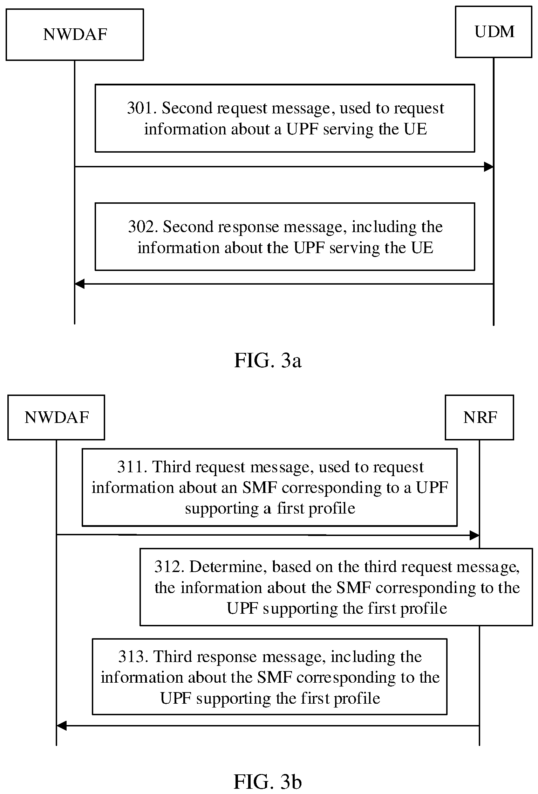

FIG. 3a is a schematic flowchart of a network element information obtaining method according to this application. The method provides an example of a manner of determining the UPF that provides the first user plane data. This is a method used by the NWDAF to address the UPF when the NWDAF needs to obtain user plane data of a UE. The method includes the following steps.

Step 301: The NWDAF sends a second request message to the UDM. Correspondingly, the UDM receives the second request message from the NWDAF.

The second request message is used to request, from the UDM, information about the UPF serving the UE, for example, an identifier of the UPF serving the UE, an address (address) of the UPF serving the UE, or a name of the UPF serving the UE. In addition, the second request message may be an event exposure subscribe (event exposure subscribe) request message, a user context management (context management, UE-CM)-get request message, or a request message in another form for implementing the foregoing functions. A form of the second request message is not specifically limited in this application.

In a possible implementation, the second request message may include information about the UE, for example, an identifier of the UE. Specifically, the identifier of the UE may be a subscription permanent identifier (subscription permanent identifier, SUPI) or a global positioning system identifier (global positioning system identifier, GPSI) of the UE. In this way, the UDM determines, based on the information about the UE and the subscription information and context information that are related to the UE and stored in the UDM, the information about the UPF serving the UE.

Step 302: The UDM sends a second response message to the NWDAF. Correspondingly, the NWDAF receives the second response message from the UDM.

The second response message includes the information about the UPF serving the UE. For the information about the UPF, refer to the description of step 301. Details are not described herein again. In addition, the second response message may alternatively be an event exposure subscribe (event exposure subscribe) response message.

It can be learned from step 301 and step 302 that the NWDAF can obtain user plane data related to a UE. Because the NWDAF may first obtain the UPF serving the UE, a range of final subscription object of the SMF, namely, UPFs may be limited. This helps avoid sending a subsequent subscription request message to an unrelated UPF, and reduces signaling overheads.

Further, the NWDAF further needs to determine an SMF serving the UE. Because one UPF may be administrated by one SMF or administrated by a plurality of SMFs, the SMF serving the UE corresponds to the UPF serving the UE. For example, the following provides three possible implementations of determining an SMF serving the UE.

Implementation A: The NWDAF may obtain, from the UDM, the SMF serving the UE.

Specifically, the second request message in step 301 may be further used to request, from the UDM, information about the SMF serving the UE, for example, an identifier of the SMF serving the UE, an address (address) of the SMF serving the UE, or a name of the SMF serving the UE. Correspondingly, the second response message in step 302 may further include the information about the SMF serving the UE. It may also be understood that, when obtaining, from the UDM, the information about the UPF serving the UE, the NWDAF obtains the information about the SMF serving the UE. Certainly, the NWDAF may separately request, from the UDM, the information about the SMF serving the UE. That is, the NWDAF may first request, from the UDM, the information about the UPF serving the UE, and then request, from the UDM, the information about the SMF serving the UE.

Implementation B: An association relationship between the UE and the SMF serving the UE is configured or stored in the NWDAF.

The association relationship between the UE and the SMF serving the UE may be configured by an operator, or may be stored by the NWDAF in a data collection and data association procedure. For example, if the NWDAF finds, from collected data corresponding to the UE, that session management data of the UE comes from one SMF, the SMF is determined as the SMF serving the UE. The NWDAF stores the association relationship between the UE and the SMF serving the UE. For another example, if the NWDAF finds, from collected data corresponding to the UE, that session management data of the UE comes from a plurality of SMFs, the plurality of SMFs serving the UE are determined as SMFs serving the UE. The NWDAF stores the association relationship between the UE and the plurality of SMFs serving the UE.

Implementation C: The NWDAF obtains, from the NRF, the SMF serving the UE.

The NWDAF may query the NRF for the SMF serving the UE. For example, the NWDAF may send a query request to the NRF. Specifically, the query request may include current status information of the UE, for example, a network location at which the UE is currently located, time, information about a group in which the UE is located, a public land mobile network (public land mobile network, PLMN) to which the UE belongs, and slice information. Correspondingly, the NRF receives the query request from the NWDAF, and may determine, based on the current status information of the UE in the query request, the SMF serving the UE.

Scenario 2: The NWDAF obtains user plane data corresponding to a UPF supporting a profile. In scenario 2, the user plane data is user plane data corresponding to a UPF supporting a profile. For ease of describing the solution, the following uses the UPF supporting a first profile (the first profile is a UPF profile) as an example, where the first profile is a profile (UPF Profile) supported by the UPF. User plane data corresponding to the UPF supporting the first profile is referred to as second user plane data. It should be understood that an SMF corresponding to the UPF supporting the first profile in scenario 2 may be the same as or different from the SMF serving the UE in scenario 1. The UPF supporting the first profile may be the same as or different from the UPF serving the UE in scenario 1.

In a possible implementation, the first profile may include at least one of the following: information about the SMF (for example, a name of the SMF, an identifier of the SMF, or an address of the SMF) associated with the UPF, information about an application supported by the UPF (for example, a name of the supported application or an identifier of the supported application), information about whether the UPF supports a capability exposure service (for example, the UPF supports an event exposure service), service area information (UPF service area) of the UPF, and information about a user group served by the UPF. Table 1 shows a relationship between a UPF and a supported first profile according to this application.

**Table 1 Relationship between a UPF and a first profile**

| UPF profile (UPF Profile) | Example (example) | Description (description) |
|---|---|---|
| UPF capability (UPF capability) | Supported XX application (supported XX application) | UPF capability information, for example, support for an application |
| Name of a service supported by the UPF (UPF supported service name) | Event exposure service (event exposure service) | Information about a service supported by the UPF, for example, a capability exposure service |
| UPF service area (UPF service area) | TAI list (TAI list) Cell list (cell list) | UPF service area |
| User group served by the UPF (UE group serviced by UPF) | | User group served by the UPF |
| SMF associated with the UPF (UPF related SMF) | SMF identifier or SMF address (SMF ID or SMF address) | SMF associated with the UPF |

For example, if the NWDAF needs to subscribe to traffic usage of all UEs on the UPF in a specific area range, the first profile is a specific service area (service area). For another example, if the NWDAF needs to subscribe to a data packet size of an application on a UPF supporting the specific application (application), the first profile is supporting the specific application. For another example, if the NWDAF needs to subscribe to related user plane data on a UPF corresponding to a user group (UE group), the first profile is supporting a specific group.

To obtain the user plane data corresponding to the UPF supporting a profile, the NWDAF needs to obtain the user plane data from the UPF supporting a profile, and the NWDAF may first address, to the NRF, the SMF corresponding to the UPF supporting the first profile. In this application, the NWDAF may determine, based on the first profile, the SMF corresponding to the UPF supporting the first profile. That is, the NWDAF may first address, to the NRF, the SMF corresponding to the UPF supporting the first profile. FIG. 3b is a schematic flowchart of another network element information obtaining method according to this application. The method provides an example of a method for determining an SMF corresponding to the UPF supporting the first profile. The method includes the following steps.

Step 311: The NWDAF sends a third request message to the NRF. Correspondingly, the NRF receives the third request message from the NWDAF.

Herein, the third request message is used to request, from the NRF, information about an SMF corresponding to a UPF supporting a first profile. Further, it may also be determined that the third request message is used to indicate that an addressing object is the SMF (that is, target NF type=SMF). In a possible implementation, the third request message may be a discovery (discovery) request message.

In a possible implementation, the NWDAF may determine, based on the first profile, a second profile (where the second profile is an SMF profile) supported by the SMF corresponding to the UPF supporting the first profile. That is, the NWDAF may generate the second profile based on the first profile. For example, the first profile includes a public land mobile network identifier (public land mobile network identification, PLMN ID) 1, a single network slice selection assistance information (single network slice selection assistance information, S-NSSAI) ID 1, and a service area (service area) 1. In this case, the second profile that may be generated by the NWDAF based on the first profile is: a PLMN ID 1, an S-NSSAI ID 1, and a service area 2 (including the service area 1).

In step 311, the third request message may include the first profile, may include the second profile, or may include the first profile and the second profile. Based on specific content (which may also be referred to as a condition for filtering out the SMF) carried in the third request message, the following three cases are separately described in detail.

Case A: The third request message includes the first profile. The first profile is used by the NRF to determine the SMF corresponding to the UPF supporting the first profile.

The case A may be further divided into the following two cases.

Case A-1: The first profile includes the information about the SMF associated with the UPF supporting the first profile. This indicates that when the UPF registers with the NRF, the information about the SMF associated with the UPF supporting the first profile is also stored in the NRF as the first profile of the UPF. It may be understood that, because the SMF is responsible for selecting and allocating a UPF for a UE, there is an association relationship between the SMF and the UPF. For example, a UPF is administrated by an SMF. For another example, a service area (service area 1) of the UPF is included in a service area (service area 2) of the SMF. For another example, the UPF and the SMF are in a same slice. The case A-1 may also be understood as follows: The third request message includes the first profile, and the first profile includes the information about the SMF associated with the UPF supporting the first profile.

Case A-2: The first profile does not include the information about the SMF associated with the UPF supporting the first profile. That is, the third request message includes the first profile, and the first profile does not include the information about the SMF associated with the UPF supporting the first profile.

Case B: The third request message includes the second profile. The second profile is used by the NRF to determine information about an SMF supporting the second profile.

Case C: The third request message includes the first profile and the second profile.

The case C may be further divided into the following two cases.

Case C-1: The first profile includes the information about the SMF associated with the UPF supporting the first profile. That is, the third request message includes the first profile and the second profile, and the first profile includes the information about the SMF associated with the UPF supporting the first profile.

Case C-2: The first profile does not include information of the SMF associated with the UPF supporting the first profile. That is, the third request message includes the first profile and the second profile, and the first profile does not include the information about the SMF associated with the UPF supporting the first profile.

Step 312: The NRF determines, based on the third request message, the information about the SMF corresponding to the UPF supporting the first profile.

Based on the case A-1 in step 311, the NRF may directly determine, based on the information that is about the SMF associated with the UPF supporting the first profile and that is included in the first profile, the information about the SMF corresponding to the UPF supporting the first profile.

Based on the case A-2 in step 311, because the NRF may determine the associated second profile based on the first profile, the NRF may further determine, based on the second profile, the information about the SMF corresponding to the UPF supporting the first profile. Specifically, the NRF may compare the first profile with a locally stored second profile of each SMF, and determine an SMF corresponding to a second profile that has a common profile with the first profile as the SMF corresponding to the UPF supporting the first profile. For example, if the first profile includes a PLMN ID 1, an S-NSSAI ID 1, and a service area 1, the NRF finds, from locally stored second profiles of all SMFs, an SMF corresponding to a profile of the PLMN ID 1, the S-NSSAI ID 1, and the service area 2 (including the service area 1), and determines the SMF as the SMF corresponding to the UPF supporting the first profile.

Based on the case B in step 311, the NRF determines, based on the second profile, the information about the SMF corresponding to the UPF supporting the first profile. For details, refer to descriptions in the prior art. Details are not described herein.

Based on the case C-1 in step 311, the NRF may directly determine, based on the SMF associated with the UPF supporting the first profile, the information about the SMF corresponding to the UPF supporting the first profile. The determined SMF corresponding to the UPF supporting the first profile needs to support the second profile.

Based on the case C-2 in step 311, the NRF may determine, based on the second profile, the information about the SMF corresponding to the UPF supporting the first profile. For details, refer to descriptions in the prior art, and details are not described herein.

Step 313: The NRF sends a third response message to the NWDAF. Correspondingly, the NWDAF receives the third response message from the NRF.

The third response message includes the information about the SMF corresponding to the UPF supporting the first profile. In addition, the third response message may be a discovery (discovery) response message.

Further, when the third request message includes the first profile, the NRF may further determine, based on the first profile, the information about the corresponding UPF. Correspondingly, the third response message may also include the information about the UPF supporting the first profile.

According to the foregoing step 311 to step 313, the NWDAF obtains related user plane data from the UPF supporting the first profile. The NWDAF first determines the SMF based on the first profile, thereby avoiding subscription to an unrelated SMF. That is, a range of subscribed SMFs is limited, reducing signaling overheads.

The following further describes in detail the method for obtaining the user plane data by the NWDAF based on different cases.

The following uses a subscription process as an example for description. In the subscription process, a first identifier may be a first event identifier (event ID), and a second identifier may be a second event identifier. The first identifier is used to indicate a type of the user plane data to the SMF, and the second identifier is used to indicate the type of the user plane data to the UPF. For ease of describing the solution, the first identifier between the NWDAF and the SMF is referred to as a first event identifier (an event identifier is also referred to as an event type), and the second identifier between the UPF and the SMF is referred to as a second event identifier. That is, the first event identifier is used to identify an event between the NWDAF and the SMF, and the second event identifier is used to identify an event between the UPF and the SMF. Further, filtering information (event filter) between the NWDAF and the SMF is referred to as first filtering information, and filtering information between the UPF and the SMF is referred to as second filtering information.

It should be noted that the first request message may include the first event identifier, the first filtering information, or the first event identifier and the first filtering information. For ease of describing the solution, an example in which the first request message includes the first event identifier and the first filtering information is used for description.

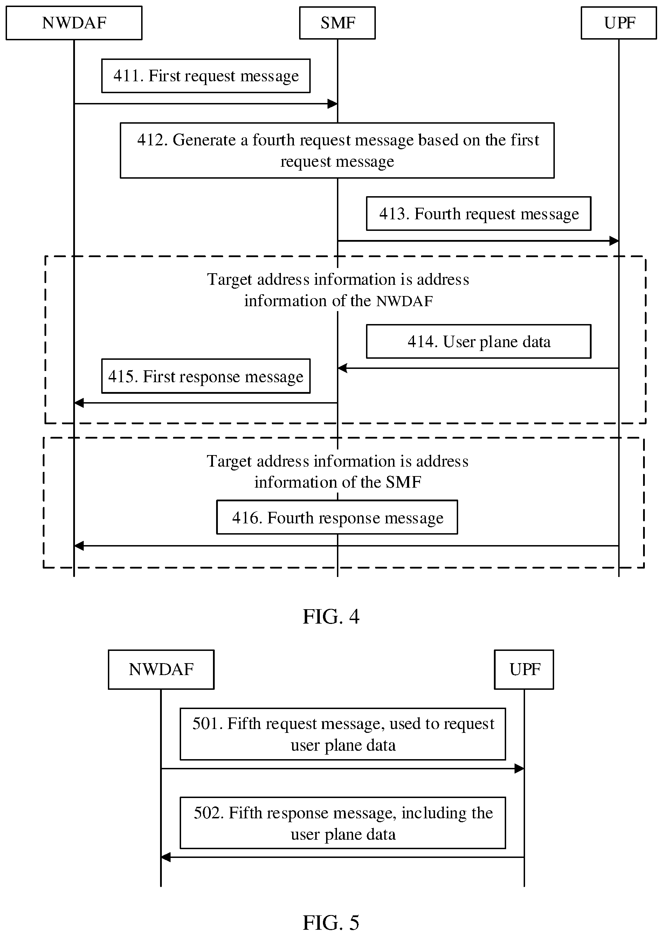

FIG. 4 is a schematic flowchart of still another user plane data obtaining method according to this application. The method includes the following steps.

Step 411: An NWDAF sends a first request message to an SMF. Correspondingly, the SMF receives the first request message from the NWDAF.

In step 411, the first request message may be an event exposure subscribe (event exposure subscribe) request message. The first request message may further include a first event identifier and first filtering information. Specifically, the NWDAF may set, based on a type of to-be-obtained user plane data, the first event identifier and the first filtering information that are subscribed to from the SMF.

Based on the foregoing scenario 1, the NWDAF needs to obtain user plane data associated with a UE, for example, traffic usage of the UE in a period of time in an area. In this case, the NWDAF may set the first event identifier to a traffic usage report (traffic usage report), and set the first filtering information to other possible filtering information (other option filter) such as {time information (time), area information (area), UE identifier (UE ID)}. For another example, if the NWDAF needs to obtain a flow bit rate measurement value of a service flow corresponding to an application of a UE, the NWDAF may set the first event identifier as the flow bit rate measurement value, and may set the first filtering information to other possible filtering information (other option filter) such as {application identifier (application ID), UE identifier (first UE ID)}.

Based on the foregoing scenario 2, the NWDAF needs to obtain data corresponding to a UPF supporting a first profile. For example, if the NWDAF needs to obtain traffic statistics of all UPFs in a period of time in an area, the NWDAF may set the first event identifier to a UPF traffic measurement report (traffic measurement report), and set the first filtering information to {time information (time), area information (area)}. For another example, if the NWDAF needs to obtain a flow bit rate measurement value of a service flow corresponding to an application (application), the NWDAF may set the first event identifier as the flow bit rate measurement value, and set the first filtering information to {application identifier (application ID)}. It may also be understood that the NWDAF may generate the first filtering information based on the first profile.

Step 412: The SMF may generate a fourth request message based on the first request message.

Specifically, the first request message may include the first event identifier and the first filtering information. The first event identifier is different from a second event identifier, and the first filtering information is also different from second filtering information. Therefore, the SMF needs to determine the second event identifier based on the first event identifier, and determine the second filtering information based on the first filtering information. That is, the fourth request message includes the second event identifier and the second filtering information.

In a possible implementation, the SMF may map the second event identifier to the first event identifier based on an association relationship between the first event identifier and the second event identifier. Similarly, the SMF may map the first filtering information to the second filtering information based on an association relationship between the first filtering information and the second filtering information. For example, if the first filtering information includes a UE ID (for example, an SUPI or a GPSI), and if the UPF cannot identify the SUPI or the GPSI, the SMF may map the UE ID to a UE ID' (for example, a UE IP address) that can be identified by the UPF. That is, the second filtering information may include the UE IP address. For another example, in area information included in the first filtering information, if a UPF cannot distinguish location information of a UE, but can identify time information, the SMF can learn about the location information of the UE, determine, based on the location information of the UE, a UPF that provides a service for the UE at the location, and then determine a time range of the UE at the location. That is, the SMF may map the area information in the first filtering information to the UPF serving the UE and the time information. That is, the second filtering information may include the UPF serving the UE and the time information.

It should be noted that the first event identifier and the second event identifier may alternatively be the same, and the first filtering information and the second filtering information may alternatively be the same. When the first event identifier is the same as the second event identifier, and the first filtering information is the same as the second filtering information, the first request message is the same as the fourth request message.

Step 413: The SMF sends the fourth request message to the UPF. Correspondingly, the UPF receives the fourth request message from the SMF.

In a possible implementation, the first request message may include information about the UPF. The SMF may determine, based on the information about the UPF in the received first request message, a UPF that provides user plane data, to request the user plane data from the UPF.

Based on the foregoing scenario 1, the SMF requests user plane data related to a UE. For the foregoing scenario 1, information about the sending object of the fourth request message, namely, the UPF, is obtained from the UDM. For a specific process, refer to the description in FIG. 3a. Details are not described herein again.

Based on the foregoing scenario 2, the SMF requests the user plane data corresponding to the UPF supporting the first profile. For the foregoing scenario 2, the sending object of the fourth request message, namely, the UPF, may be determined in the following three implementations.

Implementation 1: The SMF may determine, based on the first filtering information included in the first request message, the sending object of the fourth request message, namely, the UPF.

Because the SMF is responsible for selecting and allocating a UPF for a UE, there is an association relationship between the SMF and the UPF. In other words, the SMF may determine the UPF based on the first filtering information. For example, the SMF selects a UPF for a specific application, and stores an association relationship between an application identifier and the selected UPF. In this case, the SMF can obtain the corresponding UPF through mapping based on the application identifier. For another example, the SMF selects a UPF for a PDU session corresponding to a specific DNN, and stores an association relationship between a DNN identifier and the selected UPF. In this case, the SMF may obtain the corresponding UPF through mapping based on the data network name (data network name, DNN) identifier.

Implementation 2: The SMF queries, from an NRF, the UPF corresponding to the first filtering information in the first request message.

For details, refer to a procedure in which an SMF selects a UPF in a PDU session procedure of a UE in the prior art. Details are not described herein.

Implementation 3: The third response message carries the UPF information (that is, the NWDAF obtains the UPF information from the NRF).

With reference to FIG. 3b, when the third request message includes the first profile, the NRF may further determine the information about the corresponding UPF based on the first profile in the third request message. Correspondingly, when the NRF sends the third response message to the NWDAF, the third response message may carry the UPF information. When sending the first request message to the SMF, the NWDAF may include the UPF information in the first request message.

In this application, the SMF may send the fourth request message to the UPF by using the following two types of interfaces.

Type a: Service-based interface between the SMF and the UPF

Specifically, the SMF may send the fourth request message to the UPF by using the service-based interface. Specifically, the SMF sends the fourth request message to the UPF by using the service-based interface between the SMF and the UPF. In type a, the fourth request message may be an event exposure subscribe (event exposure subscribe) message.

It should be noted that, one service-based interface may be directed to a network function network element, and the network function network element may interact with another network function network element externally by using the service-based interface. Another network function network element may interact with the network function network element by using a service-based interface corresponding to the service-based interface. That is, each network function network element may provide a service externally by using a service-based interface of the network function network element, and allow another authorized network function network element to access or invoke a service of the network function network element. A network function network element that provides a service is referred to as a service provider, and a network function network element that accesses and invokes a service is referred to as a service consumer. Specific message interaction may be performed between the service provider and the service consumer by subscribing to a request message and a notification message.

Type b: N4 interface between the SMF and the UPF

Specifically, the SMF sends the fourth request message to the UPF by using the N4 interface. That is, the SMF sends the fourth request message to the UPF by using the N4 interface between the SMF and the UPF. In type b, the fourth request message may be a packet forwarding control protocol (packet forwarding control protocol, PFCP) session establishment request (session establishment request) message. In a possible implementation, the SMF may set, in a usage report rule (usage report rule, URR), a second event identifier subscribed to from the UPF, second filtering information, and the like. That is, the SMF may include the second event identifier, the second filtering information, and the like in the URR, to obtain the user plane data from the UPF. Specifically, the SMF may send the URR to the UPF by using the PFCP session establishment request message.

It should be noted that, when both the service-based interface of type a and the N4 interface of type b exist between the SMF and the UPF, priorities of the N4 interface and the service-based interface may be set. For example, the priority of the N4 interface may be set to be higher than that of the service-based interface. If the SMF determines that the user plane data to be obtained by the NWDAF can be provided by the N4 interface, the SMF may send the fourth request message by using the N4 interface between the SMF and the UPF. If the SMF determines that the N4 interface cannot provide the user plane data to be obtained by the NWDAF, the SMF may send the fourth request message by using the service-based interface between the SMF and the UPF.

In this application, the fourth request message may further include target address (target address) information. The target address information is used to notify the UPF of a target address for reporting the user plane data. A specific target address may be address information of the NWDAF or address information of the SMF. Based on the target address information carried in the fourth request message, there may be the following three cases. For case 1, step 414 and step 415 are performed after step 413. For case 2, step 416 is performed after step 413.

Case 1: The target address information is the address information of the SMF.

Step 414: The UPF sends the user plane data to the SMF. Correspondingly, the SMF receives the user plane data from the UPF.

In the case 1, the UPF may report the obtained user plane data to the SMF based on the second event identifier and the second filtering information. Correspondingly, after receiving the user plane data, the SMF may map the second event identifier to the first event identifier based on the association relationship between the first event identifier and the second event identifier, and map the second filtering information to the first filtering information based on the association relationship between the first filtering information and the second filtering information. For example, the SMF converts a UE IP address list into a group identifier (group ID) of the UE, and for another example, converts a quality of service flow identifier (quality of service flow ID, QFI) into an application identifier (application ID). For another example, the SMF aggregates a flow bit rate measurement (flow bit rate measurement) value of a quality of service flow list (quality of service flow list) into bit rate measurement corresponding to a PDU session.

Step 415: The SMF sends a first response message to the NWDAF. Correspondingly, the NWDAF receives the first response message from the SMF.

In step 415, the first response message includes the obtained user plane data. That is, the SMF may send the first response message to the NWDAF based on the first event identifier and the first filtering information to which the second event identifier and the second filtering information are mapped. Correspondingly, after receiving the first response message, the NWDAF may directly obtain the first event identifier and the first filtering information. In addition, the first response message may be an event exposure notification (event exposure notify) response message.

It should be noted that, in the case 1, the UPF may send the obtained user plane data to the SMF by using the service-based interface between the SMF and the UPF or the N4 interface between the SMF and the UPF. For details, refer to the foregoing descriptions of type a and type b. Details are not described herein again. In addition, because the SMF is responsible for selecting and allocating a UPF for the UE, when the UE moves from one UPF to another new UPF, the SMF may send the fourth request message to the new UPF, and may cancel a subscription procedure for the original UPF.

Case 2: The target address is the address information of the NWDAF.

Step 416: The UPF sends a fourth response message to the NWDAF. Correspondingly, the NWDAF receives the fourth response message from the UPF.

Based on the case 2, the UPF may directly report the fourth response message to the NWDAF without processing performed by the SMF. In this way, the SMF avoids receiving, processing, and storing data that is not required by the SMF. Further, workload of the SMF can be reduced, and the UPF can directly report the user plane data to the NWDAF.

The case 2 may be further divided into the following two possible cases.

Case 2.1: The fourth request message carries the association relationship between the second event identifier and the first event identifier and the association relationship between the second filtering information and the first filtering information.

In the case 2.1, after obtaining the user plane data based on the second event identifier and the second filtering information, the UPF may map the second event identifier to the first event identifier based on the association relationship between the first event identifier and the second event identifier, and may map the second filtering information to the first filtering information based on the association relationship between the first filtering information and the second filtering information. Further, the UPF may directly send the obtained user plane data to the NWDAF based on the first event identifier and the first filtering information, that is, the UPF may directly send the fourth response message to the NWDAF. Correspondingly, after receiving the fourth response message, the NWDAF can directly parse out the first event identifier and the first filtering information.

Case 2.2: The fourth request message does not include the association relationship between the first event identifier and the second event identifier and the association relationship between the first filtering information and the second filtering information.

In the case 2.2, after obtaining the user plane data based on the second event identifier and the second filtering information, the UPF may send the fourth response message to the NWDAF. In a possible implementation, the fourth response message may include the association relationship between the first event identifier and the second event identifier and the association relationship between the first filtering information and the second filtering information. In another possible implementation, the SMF may also send the association relationship between the first event identifier and the second event identifier and the association relationship between the first filtering information and the second filtering information to the NWDAF. Based on this, after receiving the fourth response message, the NWDAF may map the second event identifier to the first event identifier based on the association relationship between the first event identifier and the second event identifier, and map the second filtering information to the first filtering information based on the association relationship between the first filtering information and the second filtering information. For example, the NWDAF converts a UE IP address list into a group identifier (group ID) of the UE, and for another example, converts a quality of service flow identifier (quality of service flow ID, QFI) into an application identifier (application ID). For another example, the NWDAF aggregates a flow bit rate measurement (flow bit rate measurement) value of a quality of service flow list (quality of service flow list) into a bit rate measurement value (bit rate measurement) corresponding to a PDU session.

It should be noted that, based on the foregoing scenario 1, the reported user plane data is user plane data related to the UE. Based on the foregoing scenario 2, the reported user plane data is user plane data corresponding to the UPF supporting the first profile. In addition, if the NWDAF requests the user plane data from the UPF by using the SMF, and if the SMF determines that the user plane data requested from the UPF has been obtained or is about to be obtained by the SMF from the UPF by using the N4 interface, the SMF no longer invokes an event exposure (event exposure) service of the UPF, and can directly send, to the NWDAF, the user plane data that has been stored or that is to be stored in the SMF.

It should be further noted that the fourth request message may further carry a reporting condition. The reporting condition is used by the SMF to indicate, to the UPF, a form of sending the fourth response message, for example, used by the SMF to indicate the UPF to periodically report the fourth response message or indicate the UPF to report the fourth response message based on event triggering. In addition, the fourth response message may be an event exposure notification (event exposure notify) response message.

In this application, the NWDAF may further directly obtain the user plane data from the UPF. FIG. 5 is a schematic flowchart of still another user plane data obtaining method according to this application. The method includes the following steps.

Step 501: An NWDAF sends a fifth request message to a UPF. The fifth request message is used to request user plane data from the UPF.

Herein, the NWDAF may send the fifth request message to the UPF by using a service-based interface.

Step 502: The UPF sends a fifth response message to the NWDAF. The fifth response message includes the user plane data.

Herein, the UPF may send the fifth response message to the NWDAF by using the service-based interface.

Based on the solution shown in FIG. 5, the NWDAF may directly obtain the user plane data from the UPF without processing performed by an SMF. In this way, the SMF avoids receiving, processing, and storing data that is not required by the SMF. Further, workload of the SMF can be reduced, and the UPF can directly report the user plane data to the NWDAF.

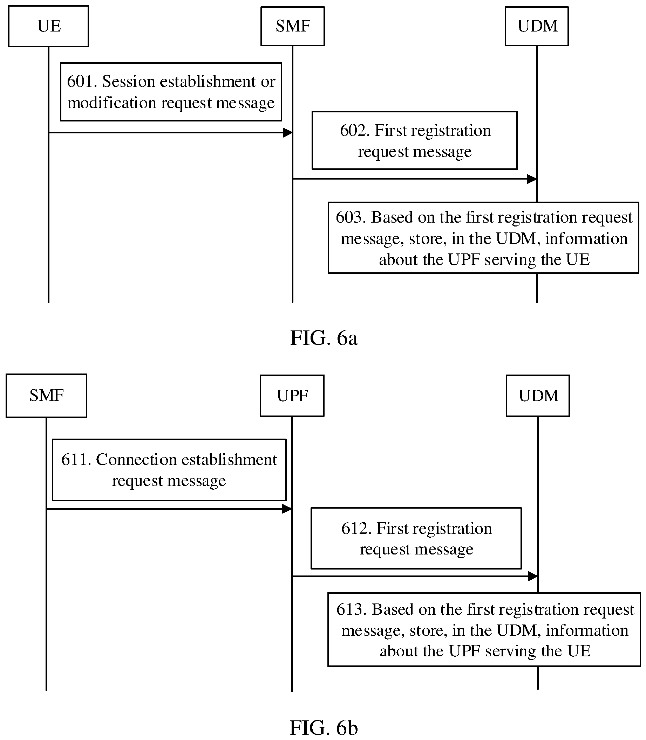

In this application, in a packet data unit (packet data unit, PDU) session (session) establishment or modification procedure of a UE, when an SMF serving the UE registers with a UDM, the SMF may further register a UPF serving the UE with the UDM. FIG. 6a shows a registration method according to this application. The method includes the following steps.

Step 601: An SMF receives a session establishment or modification request message from a UE.

The session establishment or modification request message is used to request the SMF to establish a session for the UE. The SMF is an SMF serving the UE. The step is an optional step.

Step 602: The SMF sends a first registration request message to a UDM. Correspondingly, the UDM receives the first registration request from the SMF.

Herein, the first registration request message is used to request the UDM to store, in the UDM, information about a UPF serving the UE. The UPF serving the UE corresponds to the SMF serving the UE. In some scenarios, there may be a plurality of SMFs serving the UE. For example, an intermediate SMF and an anchor SMF are included, in this scenario, information about UPFs serving the UE under each SMF may be registered with the UDM. A specific registration manner is not limited. For example, each SMF may separately register, with the UDM, the information about the UPF serving the UE under the SMF. Alternatively, the anchor SMF may register, with the UDM, the information about all UPFs serving the UE under the anchor SMF and under all intermediate SMFs. Specifically, the first registration request message may include information about the UPF, for example, an identifier of the UPF, an address of the UPF, or a name of the UPF.

Step 603: The UDM may store, in the UDM, based on the first registration request message, the information about the UPF serving the UE.

Further, the first registration request message in step 602 further includes information about the SMF serving the UE. Correspondingly, in step 603, the UDM may also store, in the UDM, based on the first registration request message, the information about the SMF serving the UE.

According to step 601 to step 603, the method can implement that the SMF registers the information about the UPF with the UDM.

In this application, the UPF serving the UE may also directly register with the UDM. FIG. 6b shows another registration method according to this application. The method includes the following steps.

Step 611: A UPF serving a UE receives a connection establishment request message from an SMF serving the UE.

Herein, the connection establishment request message is used to request the UPF to establish a user plane transmission tunnel for the UE. For example, the UPF receives a PDCP message from the SMF to request to establish the user plane transmission tunnel of the UE.

Step 612: The UPF serving the UE sends a first registration request message to a UDM. Correspondingly, the UDM receives the first registration request message from the UPF serving the UE.

In this step, the first registration request message may include information about the UPF, for example, an identifier of the UPF, an address of the UPF, or a name of the UPF.

In some scenarios, there may be a plurality of UPFs serving the UE. For example, an intermediate UPF and an anchor UPF are included, in this scenario, information about each UPF may be registered with the UDM. A specific registration manner is not limited. For example, each UPF serving the UE may separately register UPF information with the UDM. Alternatively, the anchor UPF serving the UE may register information about the anchor UPF and information about all intermediate UPFs with the UDM.

Step 613: The UDM stores, in the UDM based on the first registration request message, the information about the UPF serving the UE.

According to step 611 to step 613, the method can implement that the UPF directly registers information about the UPF with the UDM.

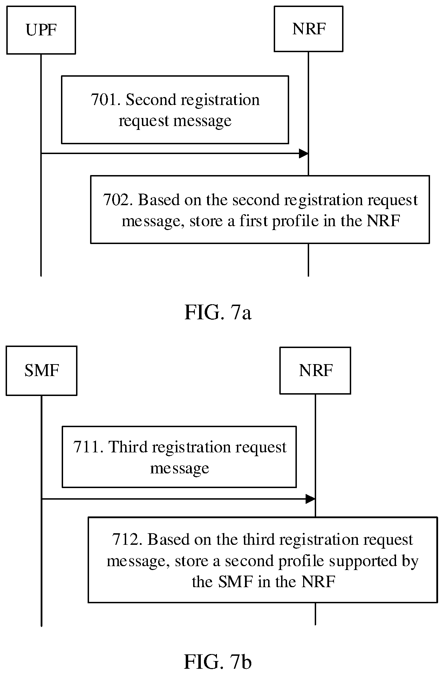

In this application, the UPF may also register the supported first profile with the NRF. FIG. 7a shows still another registration method according to this application. The method includes the following steps.

Step 701: A UPF supporting a first profile sends a second registration request message to an NRF.

The second registration request includes the first profile supported by the UPF. The first profile may include at least one of the following: information about an SMF associated with the UPF (for example, a name of the SMF, an identifier of the SMF, or an address of the SMF), information about an application supported by the UPF (for example, a name of the supported application or an identifier of the supported application), information about whether the UPF supports a capability exposure service (for example, a UPF event exposure service), service area information (UPF service area) of the UPF, and information about a user group served by the UPF. Step 701 may also be understood as that the UPF registers the first profile supported by the UPF with the NRF.

Step 702: The NRF stores the first profile in the NRF based on the second registration request message.

Through step 701 and step 702, the first profile of the UPF can be registered with the NRF, so that the NRF stores and manages the UPF. In addition, another network element may subsequently determine, based on the first profile, an SMF corresponding to the UPF supporting the first profile. In addition, the first profile includes the information about the SMF associated with the UPF. In this way, when an NWDAF needs to obtain related user plane data from the UPF supporting the first profile, the NWDAF first quickly determines the SMF corresponding to the UPF supporting the first profile. This helps avoid subscription to an unrelated SMF, and reduces signaling overheads. FIG. 7b shows another registration method according to this application. The method includes the following steps. Step 711: An SMF supporting a second profile sends a third registration request message to an NRF.

The third registration request message includes the second profile. That is, the SMF registers the second profile supported by the SMF with the NRF.

Step 712: The NRF stores, in the NRF based on the third registration request message, the second profile supported by the SMF.

Through step 711 and step 712, the second profile of the SMF supporting the second profile can be registered with the NRF, so that the NRF stores and manages the SMF. In addition, another network element may subsequently determine an SMF based on the second profile.

It should be noted that, in this application, the UPF information determining method shown in FIG. 3a may be independent of the user plane data obtaining method shown in FIG. 2. Alternatively, the user plane data obtaining method shown in FIG. 2 may be implemented based on the UPF information determining method shown in FIG. 3a. Similarly, the method for determining an SMF corresponding to a UPF supporting a first profile shown in FIG. 3b may be independent of the user plane data obtaining method shown in FIG. 2. Alternatively, the user plane data obtaining method shown in FIG. 2 may be implemented based on the method for determining an SMF corresponding to a UPF supporting a first profile shown in FIG. 3b.

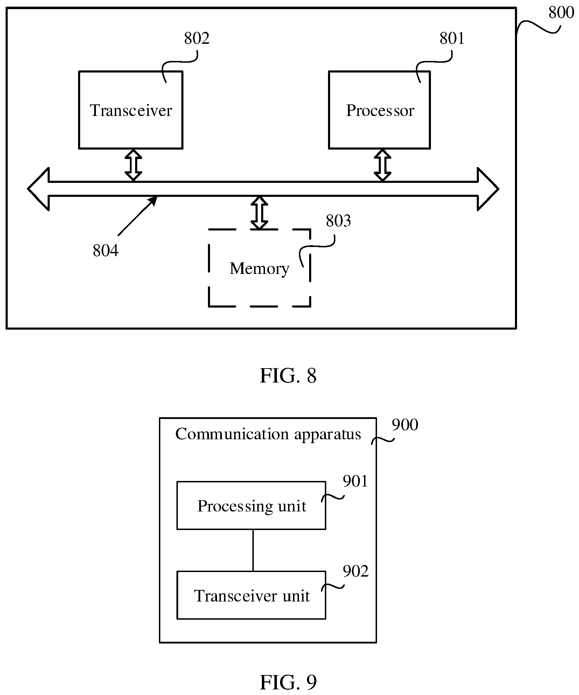

Based on the foregoing content and a same concept, FIG. 8 is a schematic diagram of a communication apparatus according to this application. The communication apparatus is configured to perform any solution on the first network element side, the session management function network element side, the data management network element side, the network repository function network element side, or the user plane function network element side in the foregoing method procedure. The communication apparatus 800 in this example may include a processor 801 and a transceiver 802. Optionally, the communication apparatus 800 may further include a memory 803 and a communication line 804. The processor 801, the transceiver 802, and the memory 803 may be connected to each other by using a communication line 804. The communication line 804 may be a peripheral component interconnect (peripheral component interconnect, PCI for short) bus, an extended industry standard architecture (extended industry standard architecture, EISA for short) bus, or the like. The communication line 804 may be classified into an address bus, a data bus, a control bus, and the like. For ease of representation, only one thick line is used to represent the bus in FIG. 8, but this does not mean that there is only one bus or only one type of bus.

The processor 801 may be a CPU, a microprocessor, an ASIC, or one or more integrated circuits configured to control program execution in the solutions of this application.

The transceiver 802 is configured to communicate with another device or a communication network, such as the Ethernet, a radio access network (radio access network, RAN), a wireless local area network (wireless local area network, WLAN), or a wired access network by using any apparatus such as a transceiver. Optionally, the transceiver 802 may be a communication interface, and the communication interface may implement a function of the N4 interface or the service-based interface in the foregoing embodiment.

The memory 803 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a disk storage medium or another magnetic storage device, or any other medium capable of carrying or storing desired program code in a form of an instruction or a data structure and capable of being accessed by a computer, but is not limited thereto. The memory may exist independently and is connected to the processor through the communication line 804. The memory may alternatively be integrated with the processor.

The memory 803 is configured to store computer-executable instructions for executing the solutions of this application, and the processor 801 controls the execution. The processor 801 is configured to execute the computer-executable instructions stored in the memory 803, to implement the user plane data obtaining method provided in the foregoing embodiments of this application.

Optionally, the computer-executable instructions in this embodiment of this application may also be referred to as application program code. This is not specifically limited in this embodiment of this application.

In a first application, the communication apparatus 800 may be a first network element, and the first network element includes:
the transceiver 802, configured to send a first request message to a session management function network element, where the first request message is used to indicate the session management function network element to request a user plane function network element to provide user plane data; and the processor 801, configured to obtain the user plane data from the user plane function network element.

When the user plane data is user plane data related to a terminal device, the transceiver 802 is further configured to: send a second request message to a data management network element, where the second request message is used to request, from the data management network element, information about the user plane function network element serving the terminal device; and receive a second response message from the data management network element, where the second response message includes information about the user plane function network element.

When the user plane data is data corresponding to a user plane function network element supporting a first profile, the transceiver 802 is further configured to: send a third request message to a network repository function network element, where the third request message is used to request, from the network repository function network element, information about a session management function network element corresponding to the user plane function network element; and receive a third response message from the network repository function network element, where the third response message includes information about the session management function network element.

In a possible implementation, the first request message may include information about the user plane function network element.

In a possible implementation, the transceiver 802 is specifically configured to: receive a first response message from the session management function network element, where the first response message includes the user plane data; or receive a fourth response message from the user plane function network element, where the fourth response message includes the first user plane data. The fourth response message is sent by the user plane function network element to the first network element after the user plane function network element receives a fourth request message from the session management function network element, and the fourth request message is generated by the session management function network element based on the first request message.

In a possible implementation, the first request message may include a first identifier. The first identifier is used to indicate a type of the user plane data to the session management function network element. The fourth request message may include a second identifier. The second identifier is used to indicate the type of the user plane data to the user plane function network element. The fourth response message may further include the second identifier. The processor 801 is specifically configured to map the second identifier to the first identifier based on an association relationship between the first identifier and the second identifier.

The association relationship between the second identifier and the first identifier may be carried in the fourth response message.

In a possible implementation, the first request message may further include first filtering information, the fourth request message may further include second filtering information, and the fourth response message may further include the second filtering information. The processor 801 is specifically configured to map the second filtering information to the first filtering information based on an association relationship between the first filtering information and the second filtering information.

The association relationship between the second filtering information and the first filtering information may also be carried in the fourth response message.

The processor 801 is further configured to obtain information about the session management function network element from the data management network element, where the session management function network element serves the terminal device.

In a possible implementation, the third request message includes the first profile.

In a possible implementation, the third response message further includes information about the user plane function network element.

In a possible implementation, the processor 801 is further configured to determine, based on the first profile, a second profile supported by the session management function network element. The third request message further includes the second profile.

For example, the first profile includes at least one of the following: the information about the session management function network element associated with the user plane function network element, information about an application supported by the user plane function network element, information about whether the user plane function network element supports a capability exposure service, service area information of the user plane function network element, and information about a user group served by the user plane function network element.

In a second application, the communication apparatus 800 may be a data management network element, and the data management network element includes:
The processor 801 cooperates with the transceiver 802, to receive a second request message from a first network element, where the second request message is used to request, from a data management network element, information about a user plane function network element serving a terminal device, and to send a second response message to the first network element, where the second response message includes the information about the user plane function network element.

In a possible implementation, the second request message is further used to request, from the data management network element, information about the session management function network element serving the terminal device, and the second response message further includes the information about the session management function network element.

In a possible implementation, the transceiver 802 is further configured to receive a first registration request message from the session management function network element and/or the user plane function network element, where the first registration request message includes the information about the user plane function network element. The processor 801 is further configured to store the information about the user plane function network element in the data management network element based on the first registration request message.

In a possible implementation, the first registration request message further includes the information about the session management function network element. The processor 801 is specifically configured to store the information about the session management function network element in the data management network element based on the first registration request message.

In a third application, the communication apparatus 800 may be a network repository function network element, and the network repository function network element includes:
The transceiver 802 is configured to receive a third request message from a first network element, where the third request message is used to request, from a network repository function network element, information about a session management function network element corresponding to a user plane function network element, and the third request message includes a first profile supported by the user plane function network element. The processor 801 is configured to determine the information about the session management function network element based on the third request message. The transceiver 802 is further configured to send a third response message to the first network element, where the third response message includes the information about the session management function network element.

In a possible implementation, the transceiver 802 is further configured to receive a second registration request message from the user plane function network element, where the second registration request message includes the first profile. The processor 801 is further configured to store, in the network repository function network element, based on the second registration request message, the first profile supported by the user plane function network element.

In a possible implementation, the processor 801 is specifically configured to: determine, based on the first profile, a second profile supported by the session management function network element, and determine the information about the session management function network element based on the second profile.

In a possible implementation, the transceiver 802 is further configured to receive a third registration request message from the session management function network element, where the third registration request message includes the second profile. The processor 801 is further configured to store the second profile in the network repository function network element based on the third registration request message.

In a possible implementation, the first profile includes at least one of the following: the information about the session management function network element associated with the user plane function network element, information about an application supported by the user plane function network element, information about whether the user plane function network element supports a capability exposure service, service area information of the user plane function network element, and information about a user group served by the user plane function network element.

In a possible implementation, the processor 801 is specifically configured to: determine that the first profile includes the information about the session management function network element associated with the user plane function network element, and determine information about the session management function network element based on the information about the session management function network element associated with the user plane function network element.

In a fourth application, the communication apparatus 800 may be a session management function network element, and the session management function network element includes:
The transceiver 802 is configured to receive a first request message from a first network element, where the first request message is used to indicate a session management function network element to request a user plane function network element to provide user plane data. The first request message includes a first identifier, where the first identifier is used to indicate a type of the user plane data to the session management function network element. The processor 801 is configured to determine, based on the first identifier, a second identifier included in a fourth request message, where the second identifier is used to indicate the type of the user plane data to the user plane function network element. The transceiver 802 is further configured to send the fourth request message to the user plane function network element, where the fourth request message is used to request the user plane data from the user plane function network element.

In a possible implementation, the first request message further includes information about a first user plane function network element.

In a possible implementation, the first request message further includes first filtering information. The processor 801 is specifically configured to determine, based on the first filtering information, second filtering information included in the fourth request message.

In a possible implementation, the fourth request message further includes target address information, where the target address information is used to notify the user plane function network element of a target address for reporting the user plane data. The target address information is address information of the first network element or address information of the session management function network element.

If the target address is the address information of the session management function network element, the transceiver 802 is further configured to send a first response message to the first network element, where the first response message includes the user plane data.

In a possible implementation, the transceiver 802 may be specifically a service-based interface or an N4 interface. That is, the fourth request message may be sent to the user plane function network element by using the service-based interface, or the fourth request message may be sent to the user plane function network element by using the N4 interface.

In a fifth application, the communication apparatus 800 may be a session management function network element, and the session management function network element includes:
The transceiver 802 is configured to: receive a session establishment request message from a terminal device, where the session establishment request message is used to request a session management function network element to establish a session for the terminal device, and send a first registration request message to a data management network element, where the first registration request message includes information about a user plane function network element serving the terminal device, and the first registration request message is used to request the data management network element to store the information about the user plane function network element in the data management network element.

In a possible implementation, the first registration request message further includes information about the session management function network element, and the first registration request is further used to request the data management network element to store the information about the session management function network element in the data management network element.

In a sixth application, the communication apparatus 800 may be a user plane function network element, and the user plane function network element includes:
The processor 801 cooperates with the transceiver 802, to receive a fifth request message from a first network element, where the fifth request message is used to request user plane data from a user plane function network element, and to send a fifth response message to the first network element, where the fifth response message includes the user plane data.

In a possible implementation, the transceiver 802 may be a service-based interface. Specifically, the fifth request message may be received from the first network element by using the service-based interface.

In a possible implementation, the transceiver 802 may be a service-based interface. Specifically, the fifth response message may be sent to the first network element by using the service-based interface.

In a seventh application, the communication apparatus 800 may be a user plane function network element, and the user plane function network element includes:
The processor 801 cooperates with the transceiver 802, to receive a fourth request message from a session management function network element, where the fourth request message is used to request user plane data from a user plane function network element, and to send a fourth response message to a first network element, where the fourth response message includes the user plane data.

In a possible implementation, the fourth request message further includes target address information, where the target address information is address information of the first network element. The transceiver 802 may be specifically configured to send the fourth response message to the first network element based on the target address information.

In a possible implementation, the transceiver 802 may be a service-based interface. Specifically, the fourth response message may be sent to the first network element by using the service-based interface.

In a possible implementation, the target address information may further be address information of the session management function network element. The transceiver 802 may be specifically configured to send the fourth response message to the session management function network element based on the target address information.

In a possible implementation, the transceiver 802 may be specifically a service-based interface or an N4 interface. That is, the fourth response message may be sent to the session management function network element by using the service-based interface, or the fourth response message may be sent to the session management function network element by using the N4 interface.

In a possible implementation, the fourth request message further includes an association relationship between a first identifier and a second identifier. The first identifier is used to indicate a type of the user plane data to the session management function network element. The second identifier is used to indicate the type of the user plane data to the user plane function network element. The processor 801 is specifically configured to map the second identifier to the first identifier based on the association relationship between the first identifier and the second identifier.

In a possible implementation, the fourth request message further includes an association relationship between first filtering information and second filtering information. The processor 801 is specifically configured to map the second filtering information to the first filtering information based on the association relationship between the first filtering information and the second filtering information.

In a possible implementation, the fourth response message further includes the association relationship between the first identifier and the second identifier, and/or the association relationship between the first filtering information and the second filtering information.

In an eighth application, the communication apparatus 800 may be a user plane function network element, and the user plane function network element includes:
The transceiver 802 is configured to: receive a connection establishment request message from a session management function network element, where the connection establishment request message is used to request a user plane function network element to establish a user plane transmission tunnel for a terminal device, and send a first registration request message to a data management network element, where the first registration request message includes information about a user plane function network element serving the terminal device. The first registration request message is used to request the data management network element to store the information about the user plane function network element in the data management network element.

In a ninth application, the communication apparatus 800 may be a user plane function network element, and the user plane function network element includes:
The transceiver 802 is configured to send a second registration request message to a network repository function network element, where the second registration request message includes a first profile supported by the user plane function network element, and the second registration request message is used to request the network repository function network element to store the first profile.

The first profile includes at least one of the following: the information about the session management function network element associated with the user plane function network element, information about an application supported by the user plane function network element, information about whether the user plane function network element supports a capability exposure service, service area information of the user plane function network element, and information about a user group served by the user plane function network element.

Based on the foregoing content and a same concept, this application provides a communication apparatus, configured to perform any solution on a first network element side, a session management function network element side, a data management network element side, a network repository function network element side, or a user plane function network element side in the foregoing method procedure. For example, FIG. 9 is a schematic diagram of a structure of a communication apparatus according to this application. The communication apparatus 900 in this example may include a processing unit 901 and a transceiver unit 902. The processing unit 901 is configured to control and manage an action of the communication apparatus 900. The transceiver unit 902 is configured to support communication between the communication apparatus 900 and another network entity. The communication apparatus 900 may further include a storage unit 903, configured to store program code and data of the communication apparatus 900.

The processing unit 901 may be a processor or a controller, for example, a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing unit 901 may implement or execute various example logical blocks, modules, and circuits described with reference to content disclosed in the present invention. Alternatively, the processor may be a combination of processors implementing a computing function, for example, including a combination of one or more microprocessors, or a combination of the DSP and a microprocessor. The transceiver unit 902 may be a communication interface, a transceiver, a transceiver circuit, or the like. The communication interface is a general term. In specific implementation, the communication interface may include a plurality of interfaces. The storage unit 903 may be a memory.

It should be understood that division into units of the communication apparatus is merely logical function division. In an actual implementation, all or some of the units may be integrated into a physical entity, or may be physically separated. In this application, the processing unit 901 may be implemented by the processor 801 in FIG. 8, and the transceiver unit 902 may be implemented by the transceiver 802 in FIG. 8. In other words, the transceiver unit 902 in this application may perform the solution performed by the transceiver 802 in FIG. 8, and the processing unit 901 in this application may perform the solution performed by the processor 801 in FIG. 8. For other content, refer to the foregoing content. Details are not described herein again. As shown in FIG. 8, the memory 803 included in the communication apparatus 800 may be configured to store code used when the processor 801 included in the communication apparatus 800 performs the solution. The code may be a program/code preinstalled in the communication apparatus 800 before delivery.

Based on the foregoing content and a same concept, this application provides a communication system. The communication system may include the first network element and the session management function network element. The first network element may execute any method on a first network element side, and the session management function network element may execute any method on a session management function network element side. For possible implementations of the first network element and the session management function network element, refer to the foregoing descriptions. Details are not described herein again.

In a possible implementation, the communication system may further include a user plane function network element and a data management network element. The first network element may perform any method on the first network element side shown in FIG. 2, FIG. 3a, FIG. 4, or FIG. 5. The session management function network element may perform any method on the session management function network element side shown in FIG. 2, FIG. 4, FIG. 6a, or FIG. 6b. The user plane function network element may perform any method on the user plane function network element side shown in FIG. 2, FIG. 4, FIG. 5, or FIG. 6b. The data management network element may perform any method on the data management network element side shown in FIG. 3a, FIG. 6a, or FIG. 6b. For possible implementations of the user plane function network element and the data management network element, refer to the foregoing descriptions. Details are not described herein again.

In another possible implementation, the communication system may further include a user plane function network element and a network repository function network element. The first network element may perform any method on the first network element side shown in FIG. 2, FIG. 3b, FIG. 4, or FIG. 5. The session management function network element may perform any method on the session management function network element side shown in FIG. 2, FIG. 4, or FIG. 7a. The user plane function network element may perform any method on the user plane function network element side shown in FIG. 2, FIG. 4, FIG. 5, or FIG. 7b. The network repository function network element may perform any method on the network repository function network element side shown in FIG. 3b, FIG. 7a, or FIG. 7b. For possible implementations of the user plane function network element and the network repository function network element, refer to the foregoing descriptions. Details are not described herein again.

In the foregoing embodiments, all or some of the functions may be implemented by using software, hardware, firmware, or any combination thereof. When being implemented by using software program, all or some of the functions may be implemented in a form of a computer program product. The computer program product includes one or more instructions. When the computer program instructions are loaded and executed on a computer, all or some of the procedures or functions according to the embodiments of this application are generated. The computer may be a general-purpose computer, a special-purpose computer, a computer network, or another programmable apparatus. The instructions may be stored in a computer storage medium or may be transmitted from a computer storage medium to another computer storage medium. For example, the instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer storage medium may be any usable medium accessible by a computer, or a data storage device, such as a server or a data center, integrating one or more usable media. The usable medium may be a magnetic medium (for example, a floppy disk, a hard disk, a tape, or a magnetic optical disk (MO)), an optical medium (for example, a CD, a DVD, a BD, or an HVD), a semiconductor medium (for example, a ROM, an EPROM, an EEPROM, a nonvolatile memory (NAND FLASH), or a solid-state drive (solid-state drive, SSD)), or the like.

A person skilled in the art should understand that the embodiments of this application may be provided as a method, a system, or a computer program product. Therefore, the embodiments of this application may use a form of hardware only embodiments, software only embodiments, or embodiments with a combination of software and hardware. Moreover, the embodiments of this application may use a form of a computer program product that is implemented on one or more computer-usable storage media (including but not limited to a disk memory, a CD-ROM, an optical memory, and the like) that include computer-usable program code.

The embodiments of this application are described with reference to the flowcharts and/or block diagrams of the method, the device (system), and the computer program product according to the embodiments of this application. It should be understood that instructions may be used to implement each procedure and/or each block in the flowcharts and/or the block diagrams and a combination of a procedure and/or a block in the flowcharts and/or the block diagrams. These instructions may be provided for a general-purpose computer, a special-purpose computer, an embedded processor, or a processor of any other programmable data processing device to generate a machine, so that the instructions executed by the computer or the processor of any other programmable data processing device generate an apparatus for implementing a specific function in one or more procedures in the flowcharts and/or in one or more blocks in the block diagrams.

These computer program instructions may be stored in a computer readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These instructions may be loaded into the computer or the another programmable data processing device, so that a series of operations and steps are performed on the computer or the another programmable device, to generate computer-implemented processing. Therefore, the instructions executed on the computer or the another programmable device provide steps for implementing a specified function in one or more procedures in the flowcharts and/or in one or more blocks in the block diagrams.

It is clear that a person skilled in the art can make various modifications and variations to the embodiments of this application without departing from the scope of this application. This application is also intended to cover these modifications and variations to embodiments of this application provided that the modifications and variations fall within the scope of protection defined by the following claims and their equivalent technologies.

## Claims

1. A user plane data obtaining method, comprising:
sending, by a first network element, a first request message to a session management function network element, wherein the first request message is used to indicate the session management function network element to request a user plane function network element to provide user plane data; and
obtaining, by the first network element, the user plane data from the user plane function network element.

2. The method according to claim 1, wherein the user plane data is user plane data related to a terminal device, and
the method further comprises:
sending, by the first network element, a second request message to a data management network element, wherein the second request message is used to request, from the data management network element, information about the user plane function network element serving the terminal device; and
receiving, by the first network element, a second response message from the data management network element, wherein the second response message comprises the information about the user plane function network element.

3. The method according to claim 1, wherein the user plane data is data corresponding to a user plane function network element supporting a first profile, and
the method further comprises:
sending, by the first network element, a third request message to a network repository function network element, wherein the third request message is used to request, from the network repository function network element, information about the session management function network element corresponding to the user plane function network element; and
receiving, by the first network element, a third response message from the network repository function network element, wherein the third response message comprises the information about the session management function network element.

4. The method according to any one of claims 1 to 3, wherein the first request message comprises the information about the user plane function network element.

5. The method according to any one of claims 1 to 4, wherein the obtaining, by the first network element, the user plane data from the user plane function network element comprises:
receiving, by the first network element, a first response message from the session management function network element, wherein the first response message comprises the user plane data; or receiving, by the first network element, a fourth response message from the user plane function network element, wherein the fourth response message comprises the user plane data; and
the fourth response message is sent by the user plane function network element to the first network element after the user plane function network element receives a fourth request message from the session management function network element, and the fourth request message is generated by the session management function network element based on the first request message.

6. The method according to claim 5, wherein the first request message comprises a first identifier, the first identifier is used to indicate a type of the user plane data to the session management function network element, the fourth request message comprises a second identifier, and the second identifier is used to indicate the type of the user plane data to the user plane function network element;
the fourth response message further comprises the second identifier; and
the method further comprises:
mapping, by the first network element, the second identifier to the first identifier based on an association relationship between the first identifier and the second identifier.

7. The method according to claim 6, wherein the fourth response message further comprises the association relationship between the second identifier and the first identifier.

8. The method according to any one of claims 4 to 7, wherein the first request message further comprises first filtering information, the fourth request message further comprises second filtering information, and the fourth response message further comprises the second filtering information; and
the method further comprises:
mapping, by the first network element, the second filtering information to the first filtering information based on an association relationship between the first filtering information and the second filtering information.

9. The method according to claim 8, wherein the fourth response message further comprises the association relationship between the second filtering information and the first filtering information.

10. The method according to claim 1 or 2, wherein the method further comprises:
obtaining, by the first network element, information about the session management function network element from the data management network element, wherein the session management function network element serves the terminal device.

11. The method according to claim 3, wherein the third request message comprises the first profile.

12. The method according to claim 3 or 11, wherein the third response message further comprises information about the user plane function network element.

13. The method according to claim 3, 11, or 12, wherein the method further comprises:
determining, by the first network element based on the first profile, a second profile supported by the session management function network element; and
the third request message further comprises the second profile.

14. The method according to any one of claims 3 and 11 to 13, wherein the first profile comprises at least one of the following content:
the information about the session management function network element associated with the user plane function network element, information about an application supported by the user plane function network element, information about whether the user plane function network element supports a capability exposure service, service area information of the user plane function network element, and information about a user group served by the user plane function network element.

15. A communication apparatus, comprising a transceiver unit and a processing unit, wherein
the transceiver unit is configured to send a first request message to a session management function network element, wherein the first request message is used to indicate the session management function network element to request a user plane function network element to provide user plane data; and
the processing unit is configured to obtain the user plane data from the user plane function network element.

16. The communication apparatus according to claim 15, wherein the user plane data is user plane data related to a terminal device; and
the transceiver unit is further configured to: send a second request message to a data management network element, and receive a second response message from the data management network element, wherein the second request message is used to request, from the data management network element, information about the user plane function network element serving the terminal device, and the second response message comprises the information about the user plane function network element.

17. The communication apparatus according to claim 15, wherein the user plane data is data corresponding to a user plane function network element supporting a first profile; and
the transceiver unit is further configured to: send a third request message to a network repository function network element, and receive a third response message from the network repository function network element, wherein the third response message comprises information about the session management function network element, and the third request message is used to request, from the network repository function network element, information about the session management function network element corresponding to the user plane function network element.

18. The communication apparatus according to any one of claims 15 to 17, wherein the first request message comprises the information about the user plane function network element.

19. The communication apparatus according to any one of claims 15 to 18, wherein the transceiver unit is specifically configured to:
receive a first response message from the session management function network element, wherein the first response message comprises the user plane data; or receive a fourth response message from the user plane function network element, wherein the fourth response message comprises the first user plane data; and
the fourth response message is sent by the user plane function network element to the first network element after the user plane function network element receives a fourth request message from the session management function network element, and the fourth request message is generated by the session management function network element based on the first request message.

20. The communication apparatus according to claim 19, wherein the first request message comprises a first identifier, the first identifier is used to indicate a type of the user plane data to the session management function network element, the fourth request message comprises a second identifier, and the second identifier is used to indicate the type of the user plane data to the user plane function network element;
the fourth response message further comprises the second identifier; and
the processing unit is further configured to:
map the second identifier to the first identifier based on an association relationship between the first identifier and the second identifier.

21. The communication apparatus according to claim 20, wherein the fourth response message further comprises the association relationship between the second identifier and the first identifier.

22. The communication apparatus according to any one of claims 18 to 21, wherein the first request message further comprises first filtering information, the fourth request message further comprises second filtering information, and the fourth response message further comprises the second filtering information; and
the processing unit is further configured to:
map the second filtering information to the first filtering information based on an association relationship between the first filtering information and the second filtering information.

23. The communication apparatus according to claim 22, wherein the fourth response message further comprises the association relationship between the second filtering information and the first filtering information.

24. The communication apparatus according to claim 15 or 16, wherein the processing unit is further configured to:
obtain information about the session management function network element from the data management network element, wherein the session management function network element serves the terminal device.

25. The communication apparatus according to claim 17, wherein the third request message comprises the first profile.

26. The communication apparatus according to claim 17 or 25, wherein the third response message further comprises information about the user plane function network element.

27. The communication apparatus according to claim 17, 25, or 26, wherein the processing unit is further configured to:
determine, based on the first profile, a second profile supported by the session management function network element; and
the third request message further comprises the second profile.

28. The communication apparatus according to any one of claims 17 and 25 to 27, wherein the first profile comprises at least one of the following content:
the information about the session management function network element associated with the user plane function network element, information about an application supported by the user plane function network element, information about whether the user plane function network element supports a capability exposure service, service area information of the user plane function network element, and information about a user group served by the user plane function network element.

29. A computer-readable storage medium, comprising instructions, wherein when the instructions are run on a computer, the computer is enabled to perform the method according to any one of claims 1 to 14.

30. A computer program product, comprising instructions, wherein when the instructions are run on a computer, the computer is enabled to perform the method according to any one of claims 1 to 14.

31. A communication system, comprising the communication apparatus according to any one of claims 15 to 28, and a session management function network element configured to communicate with the communication apparatus.
